(19) **Europäisches Patentamt**

**European Patent Office**

**Office européen des brevets**

(11) **EP 0 676 650 B1**

(12) **EUROPÄISCHE PATENTSCHRIFT**

(45) Veröffentlichungstag und Bekanntmachung des Hinweises auf die Patenterteilung:
**30.01.2002 Patentblatt 2002/05**

(51) Int Cl.$^7$: **G01S 13/76**

(21) Anmeldenummer: **95104925.3**

(22) Anmeldetag: **03.04.1995**

(54) **Verfahren zur Entfernungsmessung mit Hilfe einer Funkstrecke und Anordnung zur Durchführung des Verfahrens**

Method of distance measurement using a radio link and apparatus for carrying out the method

Méthode de mesure de distance à l'aide d'une liaison radio, et appareil de mise en oeuvre de la méthode

(84) Benannte Vertragsstaaten:
**AT DE FR GB IT**

(30) Priorität: **06.04.1994 DE 4411504**
**17.06.1994 DE 4421349**

(43) Veröffentlichungstag der Anmeldung:
**11.10.1995 Patentblatt 1995/41**

(73) Patentinhaber: **EADS Deutschland GmbH**
**81663 München (DE)**

(72) Erfinder:
• **Negretti, Frank-Mario, Dipl.-Ing.**
**D-89269 Vöhringen (DE)**

• **Nüssle, Gerhard, Dipl.-Ing.**
**D-89134 Blaustein (DE)**
• **Schneider, Ulrich, Dipl.-Ing.**
**D-89250 Senden (DE)**
• **Stammler, Walter, Dr.-Ing.**
**D-89077 Ulm (DE)**

(74) Vertreter: **Meel, Thomas**
**Dornier GmbH L H G**
**88039 Friedrichshafen (DE)**

(56) Entgegenhaltungen:
**GB-A- 1 039 174      US-A- 4 278 977**
**US-A- 4 454 510**

## Beschreibung

Die Erfindung betrifft ein Verfahren zur Entfernungsmessung mit Hilfe einer Daten-Funkstrecke nach Patentanspruch 1, und eine Anordnung zur Durchführung des Verfahrens nach dem Patentanspruch 6.

Aus der Radar- und Funkpeiltechnik ist es bekannt, die Entfernung eines Zieles, das elektronische Wellen reflektiert, zu bestimmen. Diese Entfernungsmessung beruht im allgemeinen auf der Messung eines Zeitintervalles zwischen einem ausgesandten Signal, z. B. einem Puls, und dem zugehörigen Echosignal. Derartige Entfernungsmessungen sind auch auf sogenannte Transponder anwendbar. Dieses sind ortsfeste und/oder bewegliche aktive oder passive Sender/Empfänger, welche ein von einer Sende-/Empfangsstation ausgesandtes Sendesignal empfangen und ein Antwortsignal aussenden. Nach der Auswertung eines Echosignals von einem Transponder ist daher dessen Identifizierung möglich.

Aus der GB-A-1039174 ist ein Verfahren nach dem Oberbegriff des Patentanspruchs 1 bekannt, wobei zur Bestimmung des Laufzeitintervalls die leading edges der ausgesandten Signale verwendet werden. Da diese verschliffen sind, führt dies bei der Auswertung zu ungenauen Entfernungsergebnissen.

Der Erfindung liegt die Aufgabe zugrunde, ein gattungsgemäßes Verfahren anzugeben, welches in kostengünstiger Weise eine zuverlässige und genaue Entfernungsmessung zwischen einer Sende-/Empfangsstation und einem Transponder ermöglicht. Der Erfindung liegt außerdem die Aufgabe zugrunde, eine Anordnung zur Durchführung des Verfahrens anzugeben.

Diese Aufgabe wird gelöst durch die in den kennzeichnenden Teilen der Patentansprüche 1 und 6 angegebenen Merkmale. Vorteilhafte Ausgestaltungen und/oder Weiterbildungen sind den Unteransprüchen entnehmbar.

Ein Vorteil der Erfindung besteht darin, daß eine Entfernungsmessung mit einer Genauigkeit von einigen Metern möglich ist.

Die Erfindung wird im folgenden anhand eines Ausführungsbeispiels näher erläutert unter Bezugnahme auf schematisch dargestellte Figuren. Es zeigen

　　Fig.1 ein Blockbild eines Ausführungsbeispiels
　　Fig.2 bis Fig.5 Diagramme zur Erläuterung der Erfindung.

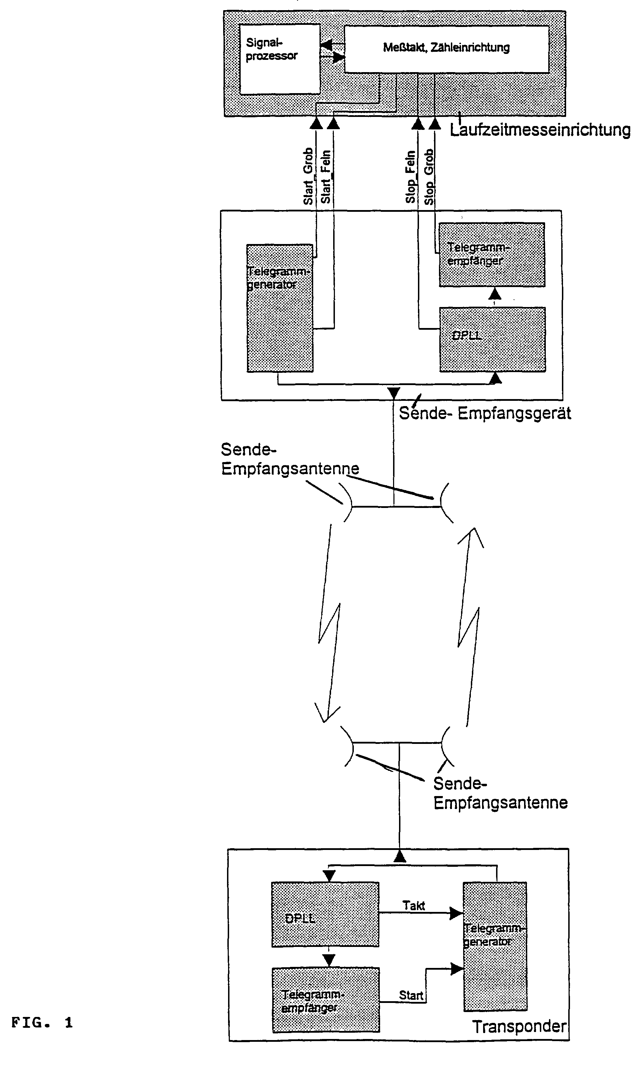

Fig.1 zeigt im oberen Teil eine Sende-/Empfangsstation, zumindest bestehend aus einer Sende-/Empfangsantenne, einem daran gekoppelten Sende-Empfangsgerät sowie einer damit verbundenen Laufzeiteinrichtung. Diese enthält einen Signalprozessor sowie eine mit Meßtakt, Zähleinrichtung bezeichnete Anordnung.

Das Sende-Empfangsgerät besteht zumindest aus einem Telegrammgenerator zum Senden von Datentelegrammen, einem digitalem Phasenregelkreis DPLL zum Empfang digitaler Funk-Signale sowie einem Telegrammempfänger zur Auswertung empfangener digitaler Funk-Signale.

Fig.1 zeigt im unteren Teil eine Sende-Empfangsantenne, die an einen Transponder gekoppelt ist. Dieser enthält zumindest ebenfalls einen digitalen Phasenregelkreis DPLL, einen Telegrammempfänger sowie einen Telegrammgenerator.

Von der Sende-/Empfangsstation wird von deren Sende-Empfangsantenne per Funk ein Datentelegramm in Form eines modulierten Sendesignals ausgesandt. Durch Synchronisation von Sende- und Empfangstakt im Transponder wird eine wechselseitige synchrone Datenübertragung zwischen der Sende-/Empfangsstation sowie einem räumlich entferntem Transponder sichergestellt. Diese synchrone Datenübertragung ermöglicht eine Identifizierung des Transponders sowie eine genaue Laufzeitmessung der verwendeten elektromagnetischen Wellen. Sende-/Empfangsstation und Transponder können beide ortsfest sein, werden aber im allgemeinen relativ zueinander räumlich bewegt.

Das von der Sende-/Empfangsstation ausgesandte Sendesignal enthält ein Sende-Telegramm, das beispielsweise aus folgenden Abschnitten, die zeitlich nacheinander ausgesandt werden, aufgebaut ist:

- einem Vorlauf zur Taktsynchronisation der Taktsignale in dem Transponder,

- einer Präambel zur sogenannten Rahmensynchronisation des Datentelegramms,

- einem Abschnitt zur Übertragung von Nutzdaten von der Sende-/Empfangsstation zu dem Transponder.

Die erforderliche Bit-Synchronisation kann sowohl mit einem digitalem als auch einem analogen PLL (Phase Locked Loop) erfolgen. Die Präambel des Sende-Telegramms der Sende-/Empfangsstation enthält eine dem Transponder bekannte Zufallsfolge, vorzugsweise eine Barker-Sequenz (Barker-Code), um eine sichere Synchronisation des Datentelegramms auf der Seite des Transponders zu ermöglichen. In einer solchen Präambel wird beispielsweise festgelegt, mit welchem (Daten-)Zeichen und/oder (Daten-)Wort ein Datentelegramm beginnt sowie endet. Diese Präambel wird zusätzlich als erster Triggerimpuls (Start-Signal) für eine Funklaufzeitmessung verwendet.

Der Abschnitt für Nutzdaten ist in vielfältiger Weise nutzbar. Beispielsweise können darin Daten für einen bestimmten Transponder enthalten sein, so daß lediglich dieser angesprochen und in einer vorgebbaren Weise aktiviert wird. Weiterhin ist es möglich, durch Wahl (Codierung) der Nutzdaten lediglich eine bestimmte Gruppe von Transpondern anzusprechen und/oder zu aktivieren.

Von einem derart angesprochenen sowie aktivierten Transponder wird ein Antwort-Telegramm ausgesandt, welches von der Sende-/Empfangsstation mit Hilfe einer ebenfalls synchronen Datenübertragung empfangen und ausgewertet wird. Das Antwort-Telegramm hat dazu denselben Aufbau wie das beschriebene Sende-Telegramm, nämlich

- einen Vorlauf zur Taktsynchronisation,
- eine Präambel,
- einen Abschnitt zur Übertragung von Nutzdaten.

In dem Antwort-Telegramm enthält die Präambel des Transponders eine der Sende-/Empfangsstation bekannte Zufallsfolge, vorzugsweise ebenfalls eine Barker-Sequenz (Barker-Code), zur Rahmen-Synchronisation des Telegramms. Diese Präambel wird zusätzlich als zweiter Triggerimpuls (Stop-Signal) für die in der Sende-/Empfangsstation gestartete Funklaufzeitmessung verwendet. Aus der Messung der Laufzeit $T_L$ (Zeit vom Abschluß (Ende) der von der Sende-/Empfangsstation ausgesandten Präambel bis zum Abschluß (Ende) der entsprechenden vom Transponder ausgesandten und in der Sende-/Empfangsstation empfangenen Präambel) kann dann mit Hilfe der Lichtgeschwindigkeit c die Entfernung R zwischen Sende-/Empfangsstation und Transponder ermittelt werden gemäß der Formel

$$R = c \cdot T_L / 2 \ .$$

In dem Antwort-Telegramm kann der Abschnitt zur Übertragung von Nutzdaten ebenfalls in vielfältiger Weise genutzt werden, beispielsweise zur genauen Identifizierung des Transponders, seines aktuellen (Betriebs-)Zustandes oder zur allgemeinen Informationsübertragung (Quittierung eines einwandfreien Empfangs der Daten sowie zur Rückmeldung aktueller Informationen). Beispielsweise kann jedem Transponder eine diesen identifizierende Nummer, die in codierter Form in den Nutzdaten übertragen wird, zugeordnet werden.

In dem Meßwert der Laufzeit $T_L$ ist sowohl eine feste Laufzeit $T_{LF}$, die in erster Linie von den Laufzeiten und Synchronisationszeiten in den Funkgeräten herrührt, und eine enfernungsabhängige Laufzeit $T_{LR}$, die von der Länge der Funkstrecke herrührt, enthalten gemäß den Formeln:

$$T_L = T_{LR} + T_{LF}$$

und

$$R_{LR} = c \cdot T_{LR}/2 = c/2 \cdot (T_L - T_{LF}) = (c/2) \cdot T_L - R_F,$$

mit

$R_{LR}$ =    gesuchte Entfernung des Transponders von der Sende-/Empfangsstation

$R_F$ =    eine Konstante, die als eine Geräte-spezifische Entfernung betrachtet werden kann.

Die feste Laufzeit $T_{LF}$ muß mit Hilfe eines Eichvorganges bei einer bekannten Entfernung (Sende-/Empfangsstation - Transponder) ermittelt werden, sofern sie nicht vorab berechenbar ist, beispielsweise anhand bekannter Registerlaufzeiten, Gatterlaufzeiten sowie der Einschwingzeiten der verwendeten analogen Bauelemente. Mögliche Temperatur-und/oder Alterungseffekte der Bauelemente können dazu führen, daß Eichvorgänge in regelmäßigen Zeitabständen erforderlich werden.

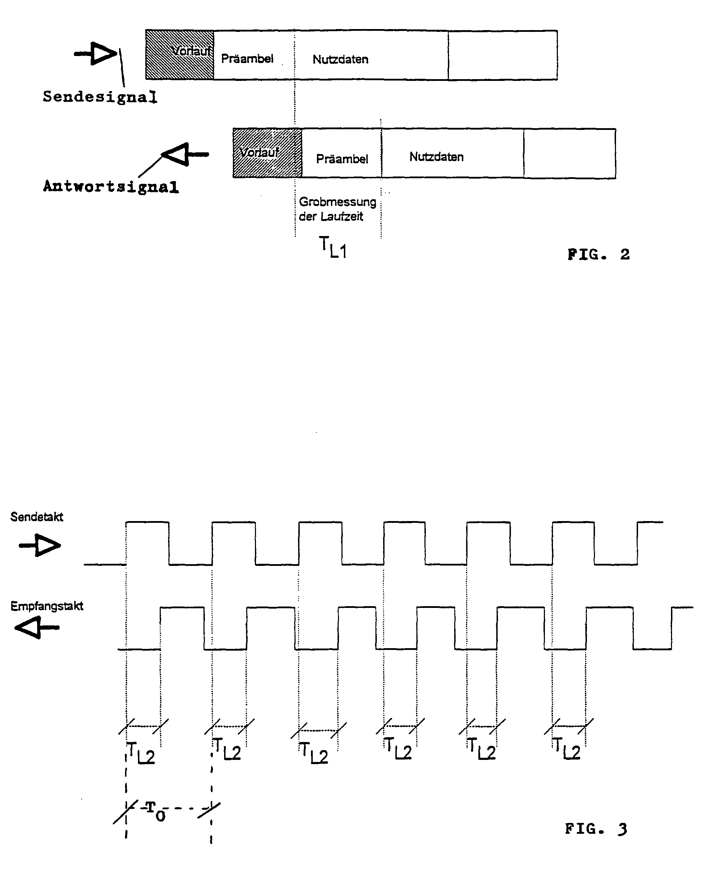

Die entfernungsabhängige Laufzeit $T_{LR} = T_{L1} + T_{L2}$ setzt sich aus zwei Anteilen zusammen, nämlich einem Grobwert $T_{L1} = N \cdot T_0$, wobei N die Anzahl der Bit- oder Taktlängen bezeichnet und $T_0$ die zeitliche Länge eines Bits oder Taktes angibt (Fig.3), sowie einem Feinwert $T_{L2}$. Gemäß Fig.2 bezeichnet also der Grobwert $T_{L1}$ die ganzzahlige Anzahl der Bit- oder Taktlängen, um welche die Enden der Präambeln des Sende-Signals (der Sende-/Empfangsstation) sowie des in der Sende-/Empfangsstation entsprechend regenerierten Antwort-Signals des Transponders entfernt sind (auseinander liegen). Da die gesuchte Entfernung keinem ganzzahligen Vielfachen des verwendeten Bit- oder Taktsignales entsprechen muß, ist zur genauen Entfernungsbestimmung eine Korrektur mit Hilfe eines Feinwertes $T_{L2}$ erforderlich. Dieser erfüllt die Bedingung $0 < T_{L2} < T_0$, das heißt, es handelt sich um den Rest, der kleiner ist als eine Bit- oder Taktlänge. Falls $T_{L2}$ in die Nähe seiner Grenzwerte 0 bzw. $T_0$ kommt, ist die Stetigkeit zu prüfen. Sobald ein Sprung um $+ T_0$ oder $- T_0$ erfolgt, ist der Meßwert $T_{L2}$ um $- T_0$ oder $+ T_0$ zu korrigieren, d.h. der Wertebereich von $T_{L2}$ erweitert sich um $T_0$ ("stetige Erweiterung bzw. stetige Fortsetzung"). Der Feinwert wird aus dem Bit- oder Takt-Signal ermittelt. Dabei wird gemäß Fig.3 in der Sende-/Empfangsstation bei einer vorgebbaren Flanke, z.B. der ansteigenden Flanke, der Laufzeitunterschied zwischen dem Sende-Signal (Sendebit oder Sendetakt) und dem Empfangs-Signal (Empfangsbit oder Empfangtakt) ermittelt. Grob- und Feinwert werden in zugehörigen Messungen ermittelt.

Die Messung des Grobwertes $T_{LR}$ beruht darauf, daß durch den erwähnten Vorlauf im Sende-Telegramm die Takte (Taktsignale) in der Sende-/Empfangsstation sowie dem Transponder synchronisiert werden. Mit Hilfe dieses synchronisierten Taktsignals ist es möglich, die von dem Transponder ausgesandte Präambel mit einem festen vorgebbarem Zeitverzug (in Inkrementen des Taktsignals) gegenüber der vom Transponder empfangenen Präambel auszusenden. Alternativ zu dem Begriff Zeitverzug ist der Begriff Zeitversatz geläufig.

Die Messung des Grobwertes beinhaltet einen Meßfehler, der von der Genauigkeit des Meßtaktes abhängt. Dieser Meßfehler kann jedoch relativ gering gehalten werden, indem Quarze mit hoher Güte verwendet werden.

Zur Bestimmung des Feinwertes $T_{L2}$ der Laufzeit werden nun über mehrere (z. B. einige Hundert) Takte Einzelmessungen durchgeführt, das heißt, der Feinwert $T_{L2}$ wird an einer Vielzahl M aufeinanderfolgender Takte gemessen. Dieser Sachverhalt ist in Fig. 3 dargestellt. Diese Einzelmessungen erstrecken sich jeweils von einer vorgebbaren Bitflanke, z.B. der ansteigenden Bitflanke, des von der Sende-/Empfangsstation ausgesandten Sendetaktes zur selben Bitflanke des in der Sende-/Empfangsstation regenerierten Empfangstaktes. Die Messungen erfolgen mittels eines hohen Meßtaktes, das heißt, der Feinwert wird durch einen gegenüber dem Sendetakt vielfach höheren, z.B. zehnfach höheren, Meßtakt fein aufgelöst. Durch die hohe Anzahl der Messungen und anschließende Mittelung werden möglicherweise durch Jitter hervorgerufene Meßfehler eliminiert, da der Taktjitter statistisch verteilt ist. Die Grenze der Meßgenauigkeit ergibt sich aus der Anzahl M von Messungen und der Auflösung, welche der Meßtakt liefert. Die Anzahl M ist wählbar und abhängig (begrenzt) von der Relativbewegung des Transponders bezüglich der Sende-/Empfangsstation. Die Relativbewegung führt zu Veränderungen der Laufzeit.

Bei der erwähnten Mittelung wird aus einer vorgebbaren Anzahl M von Feinwerten $T_{L2}(k)$, mit $1 \le k \le M$, zunächst ein mittlerer Feinwert $\tilde{T}_{L2}$ mittels eines nicht rekursiven digitalen Filters ermittelt gemäß der Formel

$$\tilde{T}_{L2} = \sum_{k=1}^{M} R \; T_{L2}(k) \cdot W_k \; ,$$

wobei $W_k$ ein Gewichtungsfaktor bedeutet. Daraus wird dann die Laufzeit $T_L$ bestimmt gemäß der Formel

$$T_L = T_{L1} + \tilde{T}_{L2}.$$

Meßfehler, welche aus der Quarzgüte resultieren, fallen hier nicht ins Gewicht, da sich die Messung nur über einen Zeitraum von max. 1 Bit erstreckt.

Voraussetzung für eine exakte Bestimmung der Funklaufzeit und somit eine genaue Ortung des Transponders sind:

- Die Aussendung des Antwort-Telegramms durch den Transponder erfolgt taktsynchron zu dem vom Tranponder empfangenen Empfangstelegramm.

- Die Aussendung der Antwort-Telegramms durch den Transponder wird durch die Präambel des Empfangstelegramms gestartet. Dadurch wird eine feste Grundlaufzeit erreicht.

- Die Laufzeit des Senders und des Empfängers müssen über einen vorgebbaren Temperaturbereich, im allgemeinen den Betriebsbereich, z.B. -20°C bis +50°C, konstant sein.

- Der Jitter des Sendetaktes gegenüber dem Empfangstakt muß statistisch verteilt sein.

So ist es bei $T_0 = 4$ |sec und M = 1000 beispielsweise möglich, eine Meßgenauigkeit von ungefähr 40 ns zu erreichen. Dabei werden die Feinwerte $T_{L2}$ der Laufzeit mit einer Frequenz von 50 MHz ausgemessen. Die Zeitkonstante der Phasenregelkreise PLL oder DPLL sowie die Anzahl M der Meßbits sind variabel. Die Meßgenauigkeit von 40 nsec entspricht einer Ortungsgenaugkeit von ungefähr 6 m. Es ist ersichtlich, daß die Meßgenauigkeit in vorteilhafter Weise von der Entfernung unabhängig ist und lediglich von dem verwendeten Taktsignal abhängt.

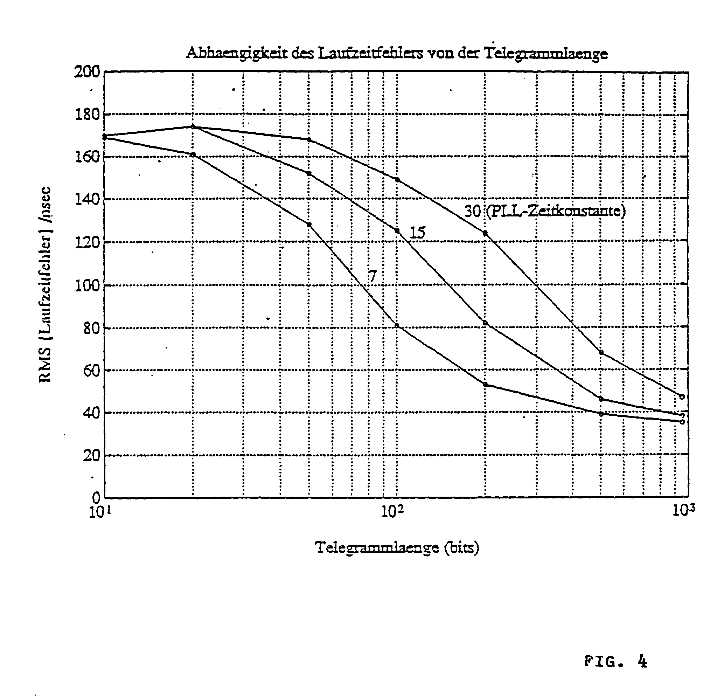

Fig.4 zeigt ein Diagramm zur Erläuterung der Abhängigkeit des Laufzeitfehlers, in Nanosekunden (nsec), mit welchem die gesuchte Laufzeit $T_L$ behaftet ist, in Abhängigkeit von Bit-Länge des Sende- und/oder Antwort-Telegramms. Dabei wird als (Schar-)Parameter die PLL- oder DPLL-Zeitkonstante verwendet.

Für die Bestimmung der Entfernung ist eine PLL- Anordnung vorteilhaft, bei der von einem Such - Modus (Acquisition - mode) in einen Folge - Modus (Tracking - mode) umgeschaltet wird. In dem Such - Modus wird zunächst eine Grobsynchronisation durchgeführt. Anschließend wird in den Folge - Modus umgeschaltet, bei dem die Feinsynchronisation und die beschriebene Ermittlung der Entfernung erfolgt.

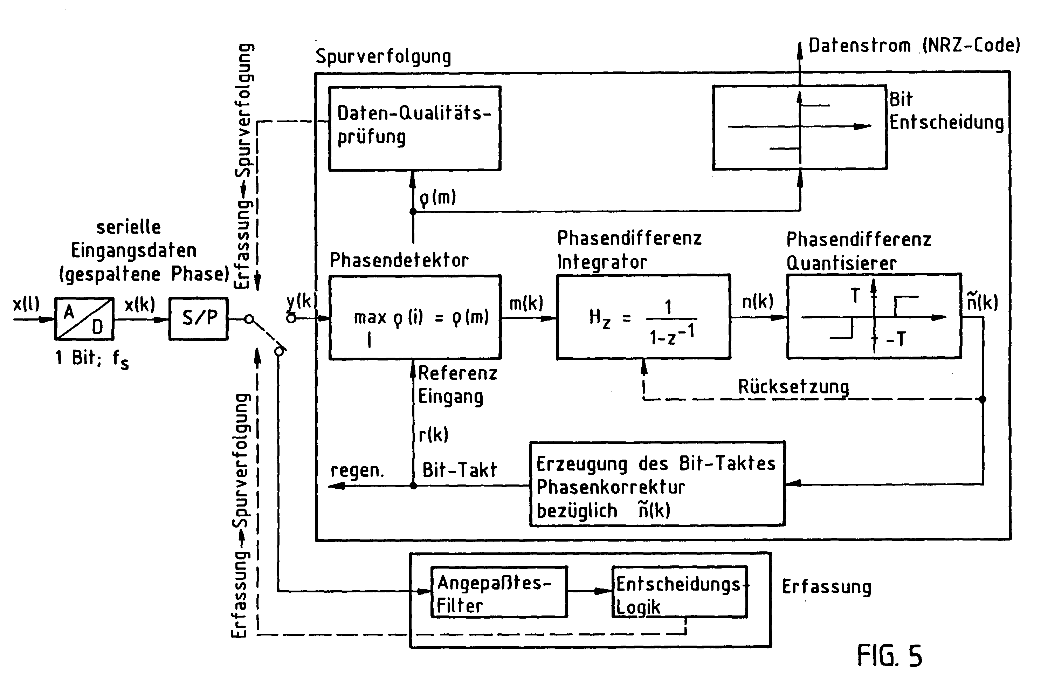

Fig.5 zeigt ein schematisch dargestelltes Blockdiagramms einer DPLL- Anordnung mit Such - Modus und Folge - Modus zur Taktregenerierung und Taktsysnchronisation sowie zur Detektion der übertragenen Datenwerte und zur Bestimmung eines Gütemaßes. Dabei bestimmt die DPLL-Anordnung durch Überabtastung und Korrelation einen aktuellen Zeitversatz für die Taktnachführung. Die in Fig.5 dargestellten Blökke haben englische Bezeichnungen, da diese einem Fachmann geläufig sind. Aus den Bezeichnungen der dargestellten Blöcken ergibt sich deren Funktion und damit die Schaltungsanordnungen zur Realisierung (Herstellung) der Blöcke. Diese können als sogenannte Hardware, z.B. in Form einer gedruckten Schaltung, hergestellt werden und/oder als sogenannte Software (Programm) auf einer in der Sende-/Empfangsstation vorhandenen Datenverarbeitungsanlage, z.B. dem Signalprozessor in Fig.1.

Nach einer bevorzugten Ausbildung der Erfindung wird zur Taktregenerierung ein digitaler Phasenregelkreis (DPLL) mit der Maßgabe eingesetzt, kurzen durch Fading bedingten Signaleinbrüchen, eine automatische Taktfortschaltung erfolgt, daß die Meßung der Fein- und Grobwerte nur in einem Tracking- und nicht in einem Aquisitationsmode erfolgt, daß durch ein Überabtastung eines Empfangssignals und einem Vergleich (Korrelation) mit den erwarteten und erlaubten Signale die momentane zeitliche Ablage des empfangenen Signals von dem regenerierten Bittakt oder Bitstrom ermittelt wird und daß die Zeitkonstante des Phasenregelkreises (PLL, DPLL) sowie Überabtastrate daraufhin abgestimmt werden, daß die Genauigkeit der Meßung des Feinwertes optimiert wird.

**Patentansprüche**

1. Verfahren zur Entfernungsmessung mit Hilfe einer Daten-Funkstrecke zwischen einer Sende-/Empfangsstation sowie einem Transponder, wobei

   - von der Sende-/Empfangsstation ein Sendesignal ausgesandt wird,

   - auf das Sendesignal von dem Transponder ein entsprechendes Antwortsignal ausgesandt wird und

   - von der Sende-/Empfangsstation zum Transponder, ebenso wie vom Transponder zur Sende-/Empfangsstation nicht nur Nutzdaten übermittelt werden, sondern in der Sende-/Empfangsstation aus einer Funklaufzeitmessung die Entfernung des Transponders von der Sende-/Empfangsstation ermittelt wird,

   - daß das Sendesignal ein Sende-Telegramm enthält, bestehend aus einem Vorlauf zur Taktsynchronisation, einer Präambel sowie Nutzdaten,

   - daß aufgrund des Sende-Telegramms eine synchrone Datenübertragung zwischen der Sende-/Empfangsstation und dem Transponder durchgeführt wird, wobei der im Transponder regenerierte Empfangsbittakt und von dem Transponder ausgesandte Sendebittakt synchronisiert oder sogar identisch sind,

   - daß auf das Sende-Telegramm der Sende-/Empfangsstation von dem Transponder ein Antwort-Telegramm ausgesandt und von der Sende-/Empfangsstation empfangen wird,

   - daß das Antwort-Telegramm ebenfalls einen Vorlauf zur Taktsynchronisation, eine Präambel sowie Nutzdaten enthält,

   - daß in der Sende-/Empfangsstation aus dem von dieser ausgesandten Sendebittakt und dem empfangenen regenerierten Empfangsbittakt und/oder von diesen Bittakten abgeleiteten sowie mit diesen synchronisierten Takten für eine Messung der Entfernung zwischen der Sende-/Empfangsstation und dem Transponder zunächst aus dem zeitlichen Verzug der Präambeln ein Grobwert $T_{L1}$ für die Entfernung ermittelt wird,

   - daß mit dem Sendebittakt und dem regenerierten Empfangsbittakt eine Messung eines mittleren Feinwertes $\tilde{\tau}_{L2}$ durchgeführt wird und

   - daß die Gesamtlaufzeit $T_L$ bestimmt wird gemäß der Formel $T_L = T_{L1} + T_{L2}$,

   **dadurch gekennzeichnet,**

   - **daß** in der Sende-/Empfangsstation eine vorgebbare Flanke des Sendebittaktes am Ende der Präambel des Sende-Telegramms als Start-Signal für die Messung des Grobwertes $T_{L1}$ verwendet wird,

   - **daß** weiterhin eine vorgebbare Flanke des regenerierten Empfangsbittaktes am Ende der Präambel des Antwort-Telegramms als Stop-Signal für die Messung des Grobwertes ausgewertet wird,

   - **daß** aus dem zeitlichen Unterschied dieser Start-Stop-Signale der Grobwert $T_{L1}$ des Laufzeitunterschiedes $T_L$ ermittelt wird.

2. Verfahren nach Anspruch 1, **dadurch gekennzeichnet,**

   - **daß** aufgrund mehrerer Messungen des Feinwertes ein mittlerer Feinwert $\tilde{\tau}_{L2}$ ermittelt wird,

   - **daß** der mittlere Feinwert $\tilde{\tau}_{L2}$ sich aus einzelnen Feinwertmessungen $T_{L2}(k)$ zusammensetzt, welche aus der zeitlichen Differenz zwischen einem Sendebittakt und dem zur selben Zeit empfangenen regenerierten Empfangsbittaktimpuls ermittelt werden, wobei mit jedem neuen Sendebittaktimpuls ein neuer Feinwert gewonnen wird und der Feinwert bei Über- oder Unterlauf stetig fortgesetzt wird,

   - **daß** aus dem Laufzeitunterschied $T_L$ die Entfernung zwischen der Sende-/Empfangsstation und dem Transponder bestimmt wird, wobei eine feste Laufzeit $T_{LF}$ infolge von Geräteschwing- und -verzögerungszeiten der Laufzeit

$T_L$ subtrahiert wird gemäß der Formel

$$R = (c/2) \cdot (T_L - T_{LF})$$

- **daß** die feste Laufzeit $T_{LF}$ durch eine Messung der Laufzeit bei einem bekannten Abstand $R_F$ des Transponders von der Sende-/Empfangsstation ermittelt oder durch Berechnung der Verzögerungs- und Einschwingzeiten berechnet wird,

- **daß** zur Bittaktsynchronisierung ein Phasenregelkreis (PLL, DPLL), vorzugsweise ein digitaler Phasenregelkreis (DPLL), im Transponder sowie der Sende-/Empfangsstation eigesetzt wird,

- **daß** die vom Transponder herrührenden gerätespezifischen Laufzeitanteile dort gespeichert und der Sende-/Empfangsstation übermittelt werden.

3. Verfahren nach Anspruch 1 oder 2, **dadurch gekennzeichnet, daß** in einer Präambel eine an sich bekannte Bitfolge, insbesondere eine Barker-Sequenz, verwendet wird.

4. Verfahren nach einem der vorherigen Ansprüche, **dadurch gekennzeichnet, daß** zur Taktregenerierung ein digitaler Pasenregelkreis (DPLL) eingesetzt wird, mit der Maßgabe

   - daß bei kurzen durch Fading bedingten Signaleinbrüchen eine automatische Taktfortschaltung erfolgt,

   - daß die Messung der Fein- und Grobwerte nur in einem Tracking-, nicht in einem Aquisitionsmode erfolgt,

   - daß durch eine Überabtastung des Empfangssignales und einen Vergleich (Korrelation) mit den erwarteten und erlaubten Signalen die momentane zeitliche Ablage des empfangenen Signals von dem regenerierten Bittakt oder Bitstrom ermittelt wird und

   - daß die Zeitkonstante des Phasenregelkreises (PLL, DPLL) sowie die Überabtastrate daraufhin abgestimmt werden, daß die Genauigkeit der Messung des Feinwertes optimiert wird.

5. Verfahren nach einem der vorhergehenden Ansprüche, **dadurch gekennzeichnet, daß** zur Ermittlung des mittleren Feinwertes $\bar{T}_{L2}$ ein nichtrekursives digitales Filter verwendet wird, das aus einer Anzahl M von Feinwerten $T_{L2}(k)$ den mittleren Feinwert $\bar{T}_{L2}$

durch eine gewichtete Summation bestimmt gemäß der Formel

$$\bar{T}_{L2} = \sum_{k=1}^{M} T_{L2}(k) \cdot W_k \, ,$$

wobei $W_k$ ein Gewichtungsfaktor bedeutet.

6. Anordnung zur Durchführung des Verfahrens nach einem der vorhergehenden Ansprüche, **dadurch gekennzeichnet, daß** sowohl die Sende-/Empfangsstation als auch der Transponder jeweils mindestens eine Sende- und/oder Empfangsantenne zur Übertragung von Funkwellen besitzen und daß sowohl in der Sende-/Empfangsstation als auch dem Transponder Mittel zur synchronen Datenübertragung über die Funkstrecke vorhanden sind.

7. Anordnung nach Anspruch 6, **dadurch gekennzeichnet, daß** in der Sende-/Empfangsstation

   - Mittel zur Zeitmessung vorhanden sind zur Ermittlung eines Grobwertes und eines mittleren Feinwertes der Laufzeit $T_L$ und

   - Mittel zur Berechnung der Entfernung ausgehend von der Laufzeit $T_L$ und der Messung oder Berechnung gerätespezifischer Verzögerungszeit $T_{LF}$ vorhanden sind.

8. Anordnung nach einen der Ansprüche 6 oder 7, **dadurch gekennzeichnet, daß**

   - ein digitaler Phasenregelkreis (DPLL) zur Takt-Synchronisation im Transponder und/oder der Sende-/Empfangsstation vorhanden ist (sind) und

   - daß der digitale Phasenregelkreis (DPLL) durch Überabtastung und Korrelation einen aktuellen Zeitversatz für die Taktnachführung bestimmt.

**Claims**

1. Method for measuring distance with the aid of a data radio link between a transceiver station and a transponder, in which

   - a transmit signal is emitted by the transceiver station,
   - a corresponding response signal to the transmit signal is emitted by the transponder and

- not only the user data are transmitted from the transceiver station to the transponder and from the transponder to the transceiver station but the distance of the transponder from the transceiver station is determined from a radio propagation time measurement in the transceiver station,
- the transmit signal contains a transmit message consisting of a header for clock synchronization, a preamble and user data,
- a synchronous data transmission is carried out between the transceiver station and the transponder on the basis of the transmit message, the receive bit clock regenerated in the transponder and the transmit bit clock emitted by the transponder being synchronized or even identical,
- a response message to the transmit message of the transceiver station is emitted by the transponder and received by the transceiver station,
- the response message also contains a header for clock synchronization, a preamble and user data,
- in the transceiver station, a coarse value $T_{L1}$ for the distance is initially determined from the time offset of the preambles, the transmit bit clock generated by the transceiver station and the received regenerated receive bit clock and/or clock pulses derived from these bit clocks and synchronized with them, for measuring the distance between the transceiver station and the transponder,
- a mean fine value $\widetilde{T}_{L2}$ is measured by means of the transmit bit clock and the regenerated receive bit clock, and
- a total propagation time $T_L$ is determined in accordance with the formula $T_L = T_{L1} + T_{L2}$,

  **characterized in that**

- in the transceiver station, a predeterminable edge of the transmit bit clock at the end of the preamble of the transmit message is used as starting signal for measuring the coarse value $T_{L1}$,
- furthermore, a predeterminable edge of the regenerated receive bit clock at the end of the preamble of the response message is used as stop signal for measuring the coarse value,
- the coarse value $T_{L1}$ of the propagation time difference $T_L$ is determined from the time difference between the start and stop signals.

2. Method according to Claim 1, **characterized in that**

- a mean fine value $\widetilde{T}_{L2}$ is determined on the basis of a number of measurements of the fine value,
- the mean fine value $\widetilde{T}_{L2}$ is composed of individual fine value measurements $T_{L2}(k)$ which are determined from the time difference between a transmit bit clock and the regenerated receive bit clock pulse received at the same time, a new fine value being obtained with each new transmit bit clock pulse and the fine value being steadily continued in the case of overflow or underflow,
- the distance between the transceiver station and the transponder is determined from the propagation time difference $T_L$, a fixed propagation time $T_{LF}$ being subtracted due to equipment oscillation and delay times of the propagation time $T_L$ in accordance with the following formula

$$R = (c/2) \cdot (T_L\text{-}T_{LF})$$

- the fixed propagation time $T_{LF}$ is determined by measuring the propagation time at a known distance $R_F$ of the transponder from the transceiver station or is calculated by calculating the delay times and transient recovery time,
- a phase locked loop (PLL, DPLL), preferably a digital phase locked loop (DPLL) is used for bit clock synchronization both in the transponder and in the transceiver station,
- the equipment-related propagation time components originating from the transponder are stored there and are transmitted to the transceiver station.

3. Method according to Claim 1 or 2, **characterized in that** a bit sequence known per se, particularly a Barker sequence, is used in a preamble.

4. Method according to one of the preceding claims, **characterized in that** a digital phase locked loop (DPLL) is used for clock regeneration, with the specification

- that automatic clock stepping is effected in the case of short signal dips due to fading,
- that the fine values and coarse values are only measured in a tracking mode and not in an acquisition mode,
- that the instantaneous time deviation of the received signal from the regeneration bit clock or bit stream is determined by oversampling of the received signal and comparison (correlation) with the expected and allowed signals, and
- that the time constant of the phase locked loop (PLL, DPLL) and the oversampling rate are adapted for optimizing the accuracy of the measurement of the fine value.

**5.** Method according to one of the preceding claims, **characterized in that**, for determining the mean fine value $\tilde{T}_{L2}$, a non-recursive digital filter is used which determines the mean fine value $\tilde{T}_{L2}$, from a number M of fine values $T_{L2}(k)$ by means of a weighted summation in accordance with the following formula

$$\tilde{T}_{L2} = \sum_{k=1}^{M} T_{L2}(k) \cdot W_k,$$

where $W_k$ is a weighting factor.

**6.** Arrangement for carrying out the method according to one of the preceding claims, **characterized in that** both the transceiver station and the transponder have in each case at least one transmitting and/or receiving antenna for transmitting radio waves, and **in that** means for synchronous data transmission via the radio link exist both in the transceiver station and in the transponder.

**7.** Arrangement according to Claim 6, **characterized in that** the transceiver station contains

- means for measuring time for determining a coarse value and a mean fine value of the propagation time $T_L$, and

- means for calculating the distance on the basis of the propagation time $T_L$ and for measuring or calculating equipment-related delay time $T_{LF}$.

**8.** Arrangement according to either of Claims 6 and 7, **characterized in that**

- there is/are a digital phase locked loop (DPLL) for clock synchronization in the transponder and/or the transceiver station and

- the digital phase locked loop (DPLL) determines a current time offset for clock tracking by oversampling and correlation.

## Revendications

**1.** Méthode de mesure de la distance à l'aide d'une liaison radio de données entre une station émettrice/réceptrice et un transpondeur, dans laquelle

- un signal émis est émis par la station émettrice/réceptrice,
- un signal de réponse correspondant est émis par le transpondeur sur réception du signal émis et

- non seulement des données utiles sont transmises de la station émettrice/réceptrice vers le transpondeur ainsi que du transpondeur vers la station émettrice/réceptrice, mais la distance du transpondeur de la station émettrice/réceptrice est également déterminée dans la station émettrice/réceptrice à partir d'une mesure d'un temps de propagation radioélectrique,

- le signal émis contient un télégramme émis composé d'un début pour la synchronisation de l'horloge, d'un préambule et de données utiles,

- une transmission de données synchrone est effectuée entre la station émettrice/réceptrice et le transpondeur sur la base du télégramme émis, le rythme binaire de réception régénéré dans le transpondeur et le rythme binaire d'émission émis par le transpondeur étant synchronisés ou même identiques,

- un télégramme de réponse est émis par le transpondeur sur réception du télégramme émis de la station émettrice/réceptrice et reçu par la station émettrice/réceptrice,

- le télégramme de réponse contient également un début pour la synchronisation de l'horloge, un préambule et des données utiles,

- une valeur grossière $T_{L1}$ de la distance est tout d'abord déterminée à partir du retard dans le temps des préambules dans la station émettrice/réceptrice à partir du rythme binaire d'émission émis par celle-ci et du rythme binaire de réception régénéré reçu et/ou des rythmes dérivé de ces rythmes binaires et synchronisés avec ceux-ci pour une mesure de la distance entre la station émettrice/réceptrice et le transpondeur,

- une mesure d'une valeur précise moyenne $\tilde{T}_{L2}$ est effectuée avec le rythme binaire d'émission et le rythme binaire de réception régénéré et

- le temps de propagation total $T_L$ est déterminé d'après la formule $T_L = T_{L1} + T_{L2}$,

**caractérisée en ce**

- **qu'**un front prédéfini du rythme binaire d'émission est utilisé dans la station émettrice/réceptrice à la fin du préambule du télégramme émis comme signal de départ de la mesure de la valeur grossière $T_{L1}$,

- **qu'**un front prédéfini du rythme binaire de réception régénéré est ensuite interprété à la fin du préambule du télégramme de réponse comme signal d'arrêt de la mesure de la valeur grossière,

- **que** la valeur grossière $T_{L1}$, différence de temps de propagation $T_L$, est déterminée à partir de la différence dans le temps entre ces signaux de départ et d'arrêt.

2. Méthode selon la revendication 1, **caractérisée en ce**

- **qu'**une valeur précise moyenne $\tilde{T}_{L2}$ est déterminée sur la base de plusieurs mesures de la valeur précise,
- **que** la valeur précise moyenne $\tilde{T}_{L2}$ se compose de mesures individuelles de la valeur précise $T_{L2}(k)$, lesquelles ont été déterminées à partir de la différence dans le temps entre un rythme binaire d'émission et une impulsion de rythme binaire de réception régénéré reçue au même moment, une nouvelle valeur précise étant obtenue avec chaque nouvelle impulsion de rythme binaire d'émission et la valeur précise étant systématiquement poursuivie en cas de dépassement dans un sens ou dans l'autre,
- **que** la distance entre la station émettrice/réceptrice et le transpondeur est déterminée à partir de la différence de temps de propagation $T_L$, un temps de propagation fixe $T_{LF}$ conséquent des temps d'oscillation ou de retard des appareils étant déduit du temps de propagation $T_L$ d'après la formule

$$R = (c/2) \cdot (T_L - T_{LF})$$

- **que** le temps de propagation fixe $T_{LF}$ est calculé par un mesure du temps de propagation avec une distance connue $R_F$ du transpondeur de la station émettrice/réceptrice ou par un calcul des temps de retard et de réponse,
- **qu'**une boucle à verrouillage de phase (PLL, DPLL), de préférence une boucle à verrouillage de phase numérique (DPLL), est utilisée dans le transpondeur et dans la station émettrice/réceptrice pour la synchronisation des rythmes binaires,
- **que** les proportions de temps de propagation spécifiques à l'appareil qui résultent du transpondeur y sont mémorisées et transmises à la station émettrice/réceptrice.

3. Méthode selon la revendication 1 ou 2, **caractérisée en ce qu'**une séquence binaire connue en elle-même, notamment une séquence de Barker, est utilisée dans un préambule.

4. Méthode selon l'une des revendications précédentes, **caractérisée en ce qu'**une boucle à verrouillage de phase numérique (DPLL) est utilisée pour régénérer le rythme, avec pour indications

- qu'une poursuite automatique du rythme a lieu en cas d'effondrements du signal provoqués par l'effet de fading,
- que la mesure des valeurs précises et grossières n'est effectuée que dans un mode de suivi et non dans un mode d'acquisition,
- que la déviation dans le temps du signal reçu par rapport au rythme binaire régénéré ou au flux binaire est déterminé par une sur-échantillonnage du signal reçu et une comparaison (corrélation) avec les signaux attendus et autorisés et
- que les constantes de temps de la boucle à verrouillage de phase (PLL, DPLL) ainsi que le taux de sur-échantillonnage sont réglés de manière à optimiser la précision de la mesure de la valeur précise.

5. Méthode selon l'une des revendications précédentes, **caractérisée en ce qu'**un filtre numérique non récursif est utilisé pour déterminer la valeur précise moyenne $\tilde{T}_{L2}$, lequel détermine la valeur précise moyenne $\tilde{T}_{L2}$ à partir d'un certain nombre M de valeurs moyennes $T_{L2}(k)$ par une totalisation pondérée selon la formule

$$\widetilde{T}_{L2} = \sum_{k=1}^{M} T_{L2}(k) \bullet W_k \ ,$$

où $W_k$ désigne un facteur de pondération.

6. Appareil de mise en oeuvre de la méthode selon l'une des revendications précédentes, **caractérisé en ce que** la station émettrice/réceptrice ainsi que le transpondeur possèdent tous deux au moins une antenne d'émission et/ou de réception pour transmettre des ondes radioélectriques et que la station émettrice/réceptrice et le transpondeur contiennent tous deux des moyens pour la transmission synchrone de données par le biais de la liaison radio.

7. Appareil selon la revendication 6, **caractérisé en ce que** dans la station émettrice/réceptrice

- se trouvent des moyens de mesure du temps pour déterminer une valeur grossière et une valeur précise moyenne du temps de propagation $T_L$ et
- se trouvent des moyens de calcul de la distance en partant du temps de propagation $T_L$ et de la mesure ou du calcul du temps de retard $T_{LF}$ spécifique à l'appareil.

8. Appareil selon l'une des revendications 6 ou 7, **caractérisé en ce**

- **qu'**une boucle à verrouillage de phase numérique (DPLL) destinée à synchroniser le rythme se trouve dans le transpondeur et/ou la station émettrice/réceptrice et

- **que** la boucle à verrouillage de phase numérique (DPLL) détermine une déviation dans le temps courante pour le suivi du rythme par sur-échantillonnage et corrélation.

Signalprozessor

Meßtakt, Zähleinrichtung

Laufzeitmesseinrichtung

Start_Grob

Start_Fein

Stop_Fein

Stop_Grob

Telegrammgenerator

Telegrammempfänger

DPLL

Sende- Empfangsgerät

Sende-
Empfangsantenne

Sende-
Empfangsantenne

DPLL

Takt

Telegrammgenerator

Telegrammempfänger

Start

Transponder

FIG. 1

11

Sendesignal

Antwortsignal

FIG. 2

FIG. 3

**Abhaengigkeit des Laufzeitfehlers von der Telegrammlaenge**

FIG. 4

Datenstrom (NRZ-Code)

Bit Entscheidung

Phasendifferenz Quantisierer

$\tilde{n}(k)$

$T$

$-T$

Rücksetzung

$n(k)$

Phasendifferenz Integrator

$H_z = \dfrac{1}{1 - z^{-1}}$

Erzeugung des Bit-Taktes Phasenkorrektur bezüglich $\tilde{n}(k)$

Erfassung

Spurverfolgung

Daten-Qualitäts-prüfung

$\rho(m)$

Phasendetektor

$\max_i \rho(i) = \rho(m)$

$m(k)$

Referenz Eingang

$r(k)$

Bit-Takt

regen.

Entscheidungs-Logik

Angepaßtes-Filter

$y(k)$

Erfassung→Spurverfolgung→Erfassung

Spurverfolgung→Erfassung

serielle Eingangsdaten (gespaltene Phase)

S/P

$x(k)$

A/D

$x(l)$

1 Bit; $f_s$

FIG. 5